# EUROPÄISCHE PATENTSCHRIFT

(11) **EP 0 587 573 B1**
(45) Veröffentlichungstag und Bekanntmachung des Hinweises auf die Patenterteilung: **24.07.1996**
(21) Anmeldenummer: 92907090.2
(22) Anmeldetag: 31.03.1992
(51) Int. Cl.: B01J 2/20, B01J 2/26, H05B 6/14, B01J 2/22, B22F 9/00, B22F 9/08

(54) **VORRICHTUNG ZUR BILDUNG VON TROPFEN**
DROP-PRODUCING DEVICE
DISPOSITIF POUR LA FORMATION DE GOUTTES

(43) Veröffentlichungstag der Anmeldung: 23.03.1994
(73) Patentinhaber: Santrade Limited, CH-6002 Lucerne (CH)
(72) Erfinder: FROESCHKE, Reinhard, D-7056 Weinstadt-Beutelsbach (DE); GEHRMANN, Stefan, D-7150 Backnang-Heiningen (DE)
(74) Vertreter: Wilhelm, Hans-Herbert, Dr.-Ing.
(86) Internationale Anmeldenummer: EP9200711
(87) Internationale Veröffentlichungsnummer: WO9319843

(56) Entgegenhaltungen:
- DE-A- 2 853 054
- GB-A- 772 424
- US-A- 3 387 783

## Beschreibung

Die Erfindung betrifft eine Vorrichtung zur Bildung von Tropfen aus viskosen, fließfähigen Massen, die in einem drehbaren, zylindrischen Behälter mit mindestens einer mit mehreren Reinen von Öffnungen versehenen Wandung aus Stahl angeordnet und zyklisch jeweils durch eine Öffnungsreihe in Tropfenform herausdrückbar sind, sobald diese bei der Bewegung der Wandung mit einem nicht mitrotierenden Austrittsbereich zur Deckung kommt, wobei zur Beheizung insbesondere der noch in den Öffnungen verbliebenen Restmassen der Wandung und/ oder den Austrittsbereich mindestens eine Heizeinrichtung zugeordnet ist.

Vorrichtungen dieser Art sind bekannt (DE-PS 28 53 054 und DE-PS 29 41 802). Diese mit rotierenden Rohren als Behältnis versehene Vorrichtungen weisen den großen Vorteil auf, daß sie auf relativ einfache Weise und mit hoher Leistung Pastillen aus Massen bilden können, die sonst nur in Schichten auf Kühlbändern aufgebracht werden konnten und dann beim Zerbrechen zum Teil umweltschädliche Staubentwicklung aufgewiesen haben.

Es ist auch bekannt, daß die aus den Lochreihen austretenden Tropfen, die anschließend auf den Kühlband zu Pastillen werden, aufgrund ihrer Zähigkeit zu der noch in den Öffnungen verbleibenden Restmasse Fäden bilden, die dann, wenn sie nicht rechtzeitig abreißen, bei der weiteren Rotation sich am Umfang des rotierenden Behälterrohres ablegen. Um die in den Öffnungen noch befindliche Restmasse so gut wie möglich wieder zu erweichen und sie wieder in das Innere zurückzuführen, hat man auch exzentrische Spalte im Inneren angeordnet, durch die die Masse wieder zurückgesaugt wird. Zusätzlich sind auch am Außenumfang anliegende Einweiser bekannt, die man beheizt und mit deren Hilfe das am Umfang anhaftende Material wieder in die Austropföffnungen zurückgedrückt wird. Voraussetzung ist in allen Fällen, daß die zurückbewegte Masse wieder genügend aufgeheizt wird, um fließfähig genug zu sein für einen Rückführvorgang und für den erneuten Vertropfvorgang.

Man hat die rotierenden Rohre aus Korrosions- und Verschleißgründen in der Regel aus Edelstahl gefertigt. Da dieser Werkstoff aber sehr schlechte Gleiteigenschaften aufweist, hat man zwischen dem feststehenden Innenbehälter und dem rotierenden Rohr in der Regel einen Spalt geschaffen. Da die Beheizung solcher Rotoformer vom inneren feststehenden Körper her erfolgt, kommt es daher bei manchen Produkten dazu, daß der äußere rotierende Behälter und die an ihm anhaftenden Restmassen zu weit abkühlen, so daß auch die Fäden, die sich von den auf dem Kühlband abgelegten Tropfen zur rotierenden Außenfläche des Behälters ziehen, nicht immer so abreißen, daß sie in den gebildeten Tropfen auf dem Kühlband zurückfallen. Bei solchen Materialien ist daher ein einwandfreies und staubfreies Granulieren nicht immer möglich.

Es hat sich auch gezeigt, daß die Temperaturerhöhung im Inneren des feststehenden Körpers nicht beliebig hoch gewählt werden kann, um den rotierenden Außenbehälter genügend aufzuheizen. Dazu kommt, daß auch Materialien verarbeitet werden müssen, die wegen einer Explosionsgefahr nicht zu hoch aufgeheizt werden dürfen. Dies schränkt auch die Verwendung außerhalb des rotierenden Rohres angeordneter Heizungen ein.

Ähnliche Probleme können auch bei anderen Granuliereinrichtungen auftreten, wo das viskose Material zwischen einer im Inneren eines rotierenden Walzenkörpers angeordneten Auspreßwalze und der Außenwalze mit Hilfe von Verzahnungen herausgedrückt wird, die den Innenumfang der Außenwalze und dem Außenumfang der Auspreßwalze zugeordnet sind (DE-OS 36 15 677), oder bei denen einer feststehenden Düsenleiste ein umlaufendes, mit Öffnungen versehenes Band zugeordnet ist (DE-PS 33 27 479).

Der vorliegenden Erfindung liegt daher die Aufgabe zugrunde, eine Vorrichtung der eingangs genannten Art so auszubilden, daß eine auf den Bedarfsfall abgestimmte Aufheizung der bewegten Wandung ohne die Gefahr möglich ist, daß das Produkt durch Überhitzung beschädigt wird oder daß dessen Flammpunkt oder die Zündtemperatur erreicht wird.

Zur Lösung dieser Aufgabe wird bei einer Vorrichtung der eingangs genannten Art vorgeschlagen, daß die Heizeinrichtung eine induktiv arbeitende Beheizung ist, deren Induktionsspule einem parallel zu einer Mantellinie des Behälters verlaufenden und kühlmitteldurchströmten Übertragungsrohr zugeordnet ist.

Durch die induktive Beheizung kann der aus Edelstahl oder anderen geeigneten Materialien bestehende Teil der bewegten Wandung oder auch des Austrittsbereiches in relativ einfacher und gut steuerbarer Weise aufgeheizt werden, ohne daß die Temperatur der Heizeinrichtung selber zu hoch wird. Wie beim Induktionshärten bekannt, wird die Übertragungsspule gekühlt, so daß sie selbst keine Temperaturen annimmt, die zu hoch werden können. Durch die Wahl des Induktionsflusses andererseits kann in sehr einfacher Weise die Beheizung vorgenommen werden.

Vorteilhaft wird bei einem Tropfenformer der eingangs genannten Art mit einem feststehenden Innenbehälter und einem um diesen rotierenden Behälter in Rohrform, bei dem der Austrittsbereich an der Schnittlinie einer Vertikalebene mit der unteren Behälterhälfte liegt, vorgesehen werden, daß das Übertragungsrohr in der Drehrichtung des Behälters hinter dem Austrittsbereich angeordnet ist und daß in Drehrichtung des Behälters hinter dem Übertragungsrohr ein am Behälterumfang anlegbarer Einweiskörper für am Umfang vorhandenes Restmaterial vorgesehen ist.

Bei einem Tropfenformer der eingangs genannten Art mit einem am Innenumfang mit axial verlaufenden Zahnleisten versehenen Behälter und einer dessen Inneren zugeordneten, am Außenumfang mit korrespondierenden Zahnleisten versehenen Auspreßwalze kann vorteilhaft vorgesehen werden, daß der Auspreßwalze das Übertragungsrohr zugeordnet ist und daß es im Inneren einer als Hohlwalze ausgebildeten Auspreßwalze angeordnet wird. Auf diese Weise wird es nämlich möglich, auch bei einer derartigen Auspreßeinrichtung eine feine Temperierung der inneren Auspreßwalze insbesondere im Bereich des Austrittsbereiches zu erreichen und so dafür zu sorgen, daß an dieser Stelle die Viskosität der zur Tropferbildung herausgedrückten Masse gerade den für die gewünschte Tropfenbildung geeignetsten Wert erreicht.

In der Zeichnung sind zwei Ausführungsbeispiele der Erfindung dargestellt und werden im folgenden erläutert. Es zeigen:
- Fig. 1: einen schematischen Querschnitt durch einen Tropfenformer gemäß der Erfindung mit einem feststehenden Innenbehälter und einem um diesen rotierenden perforierten Außenrohr,
- Fig. 2: die schematische Darstellung des Tropfenformers der Fig. 1 in einer Draufsicht mit der Induktionsspule zur Beheizung des Außenrohres, jedoch in verkleinertem Maßstab,
- Fig. 3: einen Querschnitt ähnlich Fig. 1 jedoch durch eine Einrichtung mit einem rotierenden innenverzahnten Außenbehälter und einer in diesem angeordneten außenverzahnten Auspreßwalze und
- Fig. 4: einen schematischen Längsschnitt durch die Mittelachsen der beiden rotierenden Walzen der Fig. 3.

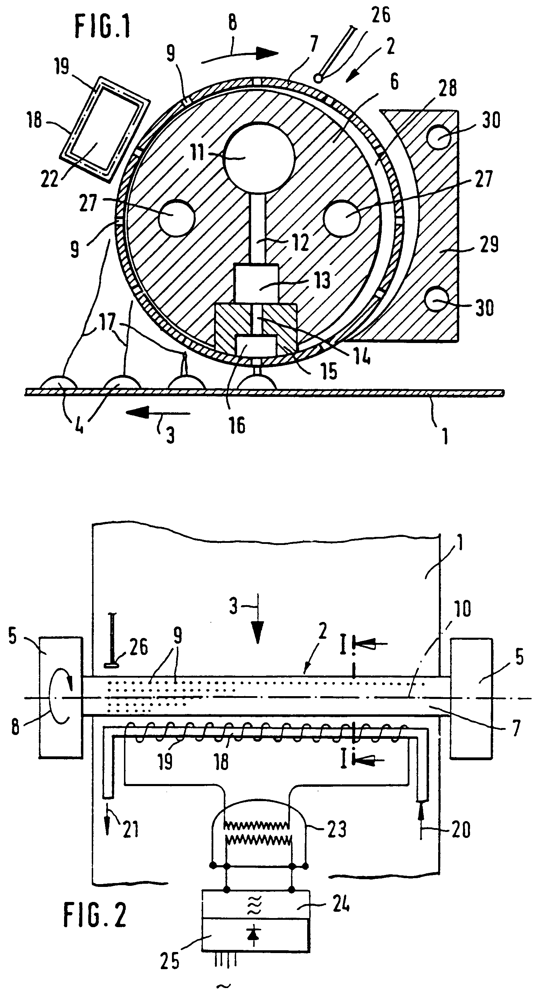

In den Fig. 1 und 2, von denen Fig. 1 einen Schnitt längs der Linie I-I der Fig. 2, jedoch in stark vergrößertem Maßstab darstellt, ist oberhalb eines als Kühlband ausgelegten Förderbandes (1) ein Tropfenformer (2) angeordnet. Das Kühlband (1) wird in Richtung des Pfeiles (3) bewegt und nimmt das aus dem Tropfenformer herausgetropfte Material in Form von Pastillen (4) auf, die sich bei der Weiterbewegung des Kühlbandes (1) in Richtung des Pfeiles (3) mehr und mehr verfestigen und dann vom Band abgenommen werden können.

Der Tropfenformer (2) besteht aus einem in nicht näher gezeigter Weise in seitlich von dem Kühlband (1) angeordneten Ständern (4) ortsfest gelagerten, zylinderartigen Innenkörper (6), um den herum ein zlindrischer rohrförmiger Behälter (7) drehbar angeordnet ist, der ebenfalls in nicht näher gezeigten Lagern in den Ständern (5) aufgenommen wird und in Richtung des Pfeiles (8) der Fig. 2 von einem Motor in Rotation versetzbar ist. Diese Art der Ausbildung eines Tropfenformers ist an sich bekannt und wird daher nicht im einzelnen beschrieben.

Der drehbare zylindrische Außenbehälter (7) weist an seinem gesamten Umfang durchgehende Öffnungen (9) auf, die in Reihen parallel zur Rotationsachse (10) entlang von Mantellinien des Behälters (7) verlaufen. Der feststehende Innenkörper (6) besitzt eine axiale Zuführöffnung (11) für das zu vertropfende Material, das diesem Kanal (11) seitlich in ebenfalls nicht näher dargestellter, weil bekannter Weise in fließfähiger Form zugeführt wird. Dieses zu vertropfende viskose Material gelangt dann durch mehrere Stichkanäle (12) zu einer ebenfalls parallel zur Achse (10) verlaufenden Kammer (13) und kann von dort aus über Bohrungen (14) einer Düsenleiste (15) und einem nutartigen Austrittsbereich (16) der Düsenleiste (15) zugeleitet werden, von wo es dann, wenn die Reihen der Öffnungen (9) zyklisch mit dem Austrittsbereich (16) zur Deckung kommen, aus den Öffnungsreihen außen auf das Kühlband (1) abtropft. Die Zufuhr von Material zu den Öffnungen (9) wird abgeschlossen, sobald die Öffnungsreihen den in Drehrichtung (8) hinteren Rand der Düsenleiste (15) erreichen. Dabei werden sich aber zum Teil aufgrund der Viskosität des zu vertropfenden Materiales Fäden (17) bilden, die dann bei der Weiterbewegung des Außenbehälters (7) abreißen sollen und, weil die Drehrichtung (8) und die Bewegungsrichtung (3) des Kühlbandes entsprechend gewählt und aufeinander abgestimmt werden können, dann in die pastillenartigen Haufen (4) des Materiales auf dem Kühlband (1) zurücksinken und mit diesem in der Regel verschmelzen sollen.

Es läßt sich je nach dem zu vertropfenden Material aber nicht in allen Fällen vermeiden, daß nicht doch Restfäden am Außenumfang des rotierenden Behälters (7) anhaften bleiben; vor allen Dingen verbleibt in den Öffnungen (9) selbst noch Restmaterial. Wenn nicht dafür gesorgt wird, daß dieses Restmaterial auf seinem Weg bis zum nächsten Erreichen der Düsenleiste (15) nicht entweder zurück in den Innenraum geführt, oder zumindest so aufbereitet wird, daß es tropffähig bleibt, kann dadurch die Funktion des Tropfenformers behindert werden. Es kann nämlich ein Verstopfen der Öffnungen mit der Zeit eintreten, so daß die Produktion unterbrochen werden muß.

Der Tropfenformer (2) der Fig. 1 und 2 ist daher mit einer Induktionsspule (18) versehen, die beim Ausführungsbeispiel einem sich parallel zu einer Mantellinie des rotierenden Behälters (2) erstreckenden, geraden Rohr entspricht, dem die Spulenwicklungen (19) entsprechend zugeordnet sind. Der auf diese Weise gebildete Induktionsspulenstab ist als ein Hohlrohr (22) ausgebildet und wird - in an sich bekannter Weise - im Sinn des Pfeiles (20) der Fig. 2 mit einem Kühlmittel versorgt, das nach der Durchströmung des Hohlraumes (2) im Sinn des Pfeiles (21) wieder austritt. Die Spule (19) selbst wird dabei in bekannter Weise in der Art einer Arbeitsspule einer Induktionshärteanlage betrieben, wobei der rotierende Außenbehälter (2) dem Werkstück entspricht und die Spule (19) über einen Hochfrequenzübertrager (23) an einem Hochfrequenzteil (24) angeschlossen ist, der seinerseits mit einem Stromversorgungsteil (25) versehen ist. Dem rotierenden Außenbehälter (2) ist außerdem ein Temperaturfühler (26) zugeordnet, dessen Sensorteil in der Nähe des Umfanges des Behälters (2) angeordnet ist. Über diesen Sensor (26) kann der Erhitzungsgrad bzw. die Temperatur des Behälters (2) erfaßt und gesteuert werden. Da der rotierende Behälter (2) in üblicher Weise aus Edelstahl besteht, läßt er sich induktiv in einfacher Weise aufheizen. Die erreichte Temperatur kann über den Temperaturfühler (26) gemessen und eingeregelt werden. Vorteilhaft ist dabei, daß der als Arbeitsspule dienende Übertragungsteil (18) selbst durch die mögliche Kühlung auf einer sehr niedrigen Temperatur gehalten werden kann, so daß Erfordernisse z.B. für einen Ex-Schutz ohne weiteres eingehalten werden können. Es wird auch möglich, die Temperatur des Behälters (2) gerade so zu steuern, wie das für das auszupressende Produkt erforderlich ist.

Bei der gewählten Ausführungsform kann auch der feststehende Innenbehälter (6) aus Edelstahl bestehen. Es besteht deshalb aus Gründen der Reibung zwischen ihm und dem rotierenden Außenbehälter (7) ein umlaufender Spalt. Auch der Innenbehälter (6), der natürlich in bekannter Weise auch noch mit zusätzlichen Beheizungsmöglichkeiten, beispielsweise in der Form von mit Thermoöl durchströmten Heizkanälen (27) versehen sein kann, kann daher zusätzlich auch induktiv aufgeheizt werden. Auch diese Beheizung kann aber über den Temperatursensor (26) gesteuert erfolgen.

Durch die gewählte Ausführungsform wird es möglich, den Tropfenformer (2) in Bereich des rotierenden Behälters (7) und der diesem zugewandten Außenbereiche des Innenbehälters (6) so aufzuheizen, daß sich das in den Öffnungen (9) nach dem Verlassen des Austrittsbereiches (16) noch befindende Restmaterial in den exzentrischen Spalt (28) zwischen Innenbehälter (6) und Außenbehälter (7) zurücksaugen läßt, so daß es von dort aus vor dem Erreichen des Austrittsbereiches in vertropffähiger Kondition wieder in die Öffnungen zurück und dann mit dem auszutropfenden Material zusammen im Austrittsbereich (16) als neuer Tropfen auf das Kühlband (1) abgegeben wird.

Zur zusätzlichen Sicherheit ist auch noch ein Einweiskörper (29) dem Außenumfang des Behälters (7) zugeordnet, der auch auf mechanische Weise dafür sorgt, daß etwa am Außenumfang noch anhaftendes Material in die Öffnungen (9) zurückgedrückt wird, ehe der Austrittsbereich (16) erreicht ist. Der Einweiskörper (29) ist beheizt. Er kann beispielsweise mit Strömungskanälen (30) für die Durchströmung mit Thermoöl versehen sein oder auch induktiv aufgeheizt werden.

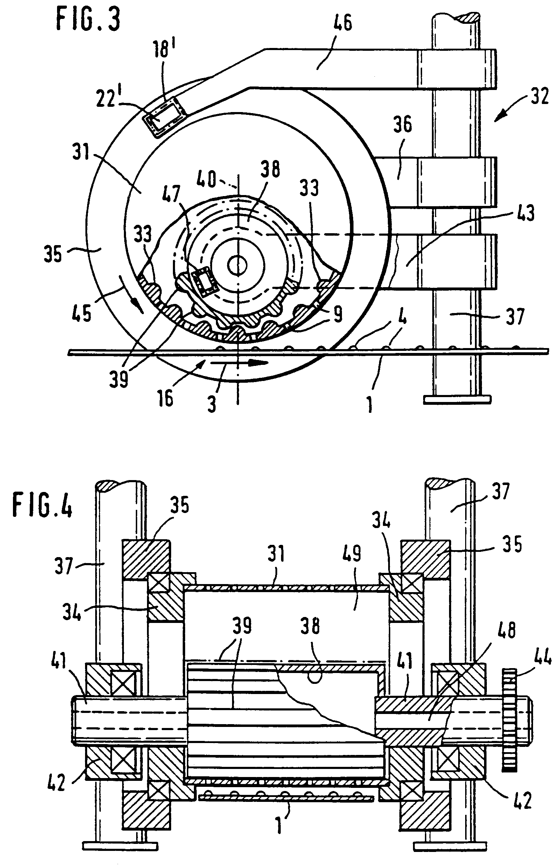

Die Fig. 3 und 4 zeigen ein anderes Ausführungsbeispiel, bei dem die Erwärmung eines rotierenden Außenkörpers und/oder eines rotierenden Innenkörpers ebenfalls induktiv erfolgt. In den Fig. 3 und 4 ist oberhalb des im Sinn des Pfeiles (3) bewegten Kühlbandes (1) eine zylindrische Walze (31) an einem Gestell (32) gelagert, die an ihrem gesamten Innenumfang mit axial verlaufenden Zahnleisten (33) versehen ist. Zwischen jeweils zwei benachbarten Zahnleisten sind die Öffnungen (9) vorgesehen, die in der gleichen Weise wie bei der Ausführungsform der Fig. 1 jeweils zu längs einer Mantellinie verlaufenden Öffnungsreihen angeordnet sind. Diese Außenwalze (31), die gemäß Fig. 4) jeweils mit ihren Stirnenden in einem Lagerring (34) gehalten ist und natürlich auch eine größere axiale Länge als in Fig. 4 dargestellt aufweisen kann, ist über ihre Lagerringe (34) in Halteringen (35) angeordnet, die ihrerseits über Abstützarme (36) an Tragsäulen (37) des Gestelles (32) gehalten sind.

Innerhalb der rotierenden Außenwalze (31) ist eine ebenfalls rotierende Auspreßwalze (38) angeordnet, die an ihrem gesamten Außenumfang mit Zahnleisten (39) versehen ist, die den Zahnleisten (33) der Außenwalze (31) entsprechen und mit diesen im Bereich einer Vertikalebene (40) in Eingriff kommen, die auch senkrecht auf dem Kühlband (1) steht. Die Auspreßwalze (38) ist hohl ausgebildet und mit nach beiden Seiten abstehenden Lagerzapfen (41) in Lagerringen (42) gelagert, die wiederum über Tragarme (43) an den Säulen (37) befestigt sind. Einer der Lagerzapfen ist mit einem Antriebsritzel (44) versehen, so daß über dieses Antriebsritzel (44) die Auspreßwalze (38) und die mit dieser in Eingriff stehende Außenwalze (31) zu einer Rotation im Sinn des Pfeiles (45) antreibbar sind. Wie beim Ausführungsbeispiel der Fig. 1 ist dabei die Drehrichtung der beiden Walzen (31 und 38) so gewählt, daß die entstehende Bewegungstangente im Bereich der Vertikalebene (40) mit der Bewegungsrichtung (3) des Kühlbandes (1) übereinstimmt.

Der Außenwalze (31) ist zusätzlich ähnlich wie beim Ausführungsbeispiel der Fig. 1 und 2 eine Induktionsspule (18') zugeordnet, die in der gleichen Weise einen mit Kühlmittel durchströmbaren Hohlraum (22') und die Spulenanordnung gemäß Fig. 2 aufweist, die aber nicht noch einmal im einzelnen dargestellt ist. Die Induktionsspule (18') wird über Haltearme (46) an den Säulen (37) befestigt. Die Haltearme (46) können dabei gleichzeitig als Zuführleitungen für das Kühlmittel ausgebildet und mit den elektrischen Zuführkabeln versehen sein.

Der Auspreßwalze (38) ist bei diesem Ausführungsbeispiel aber ebenfalls eine Induktionsspule (47) zugeordnet, deren Zuleitungen sowohl für die elektrische Energie als auch für das Kühlmittel in nicht näher gezeigter Weise innerhalb der hohlen Auspreßwalze (38) und innerhalb der mit axial verlaufenden Bohrungen (48) versehenen Wellenstummel (41) verlegt sind. Wird daher die Außenwalze (31) und die Auspreßwalze (38) aus einem ferritischen Material, beispielsweise aus kohlestoffhaltigem Stahl oder aus Eisen hergestellt, dann läßt sich auch bei einer solchen Ausführungsform in sehr feinfühliger Weise eine Beheizung und Temperierung der miteinander in Eingriff stehenden rotierenden Körper und damit auch des auszupressenden Materiales erreichen, das in den Zwischenraum (49) zwischen Auspreßwalze (38) und Außenwalze (31) axial eingebracht wird. Bei dieser Ausführungsform wird das Material hinter dem Austrittsbereich (16), der dem Bereich der Vertikalebene (40) oberhalb des Kühlbandes (1) entspricht, durch die sich wieder voneinander entfernenden Zahnleisten in die Öffnungen (9) zurückgesaugt, das aber auch nur dann, wenn es fließfähig genug gehalten wird. Auch in diesem Fall ist daher eine Aufheizung der Außenwalze (31) wichtig.

Die Anordnung der Induktionsspule (47) bringt den großen Vorteil mit sich, daß eine Aufheizung auch in dem Bereich möglich ist, der kurz vor dem Austrittsbereich (16) liegt, so daß an den Austrittsstellen jeweils exakt die Viskosität des auszupressenden Materiales erreicht und aufrechterhalten werden kann, die für die gewünschte Tropfenbildung am besten ist. Natürlich läßt sich auch bei der Ausführungsform der Fig. 3 und 4 der Außenwalze und/oder der Innenwalze ein Temperatursensor zur Steuerung der Aufheizung zuordnen. Es ist auch möglich, die der Auspreßwalze (38) zugeordnete Induktionsspule in dem Zwischenraum (49) zwischen Außenwalze (31) und Auspreßwalze (38) anzuordnen oder dort zusätzlich zu der innen angeordneten Induktionsspule (47) vorzusehen.

## Patentansprüche

1. Vorrichtung zur Bildung von Tropfen aus viskosen, fließfähigen Massen, die in einem drehbaren zylindrischen Behälter mit mindestens einer mit mehreren Reihen von Öffnungen (9) versehenen Wandung aus Stahl o.dgl. angeordnet und zyklisch jeweils durch eine Öffnungsreihe in Tropfenform herausdrückbar sind, sobald diese bei der Bewegung der Wandung mit einem nicht mitrotierenden Austrittsbereich (16) zur Deckung kommt, wobei zur Beheizung insbesondere des noch in den Öffnungen verbliebenen Restmateriales der Wandung (7, 31) und oder dem Austrittsbereich (16) mindestens eine Heizeinrichtung zugeordnet ist, dadurch gekennzeichnet, daß die Heizeinrichtung eine induktiv arbeitende Beheizung (18, 18') ist, deren Induktionsspule (18, 18') einem parallel zu einer Mantellinie des Behälters (7, 31) verlaufenden und kühlmitteldurchströmten Übertragungsrohr zugeordnet ist.

2. Vorrichtung nach Anspruch 1 mit einem zylindrischen Innenbehälter (6) und einer Wandung, die Teil eines um diesen rotierenden zylindrischen Behälters (7) in Rohrform ist, bei der der Austrittsbereich (16) an der Schnittlinie einer Vertikalebene mit der unteren Behälterhälfte liegt, dadurch gekennzeichnet, daß das Übertragungsrohr (18) in der Drehrichtung (8) des Behälters (7) hinter dem Austrittsbereich (16) angeordnet ist.

3. Vorrichtung nach Anspruch 2, dadurch gekennzeichnet, daß in Drehrichtung (8) des Behälters (7) hinter dem Übertragungsrohr (18) ein am Behälterumfang anlegbarer Einweiskörper (29) für am Umfang vorhandenes Restmaterial vorgesehen ist.

4. Vorrichtung nach Anspruch 3, dadurch gekennzeichnet, daß im Bereich des Einweisers (29) eine exzentrischer Spalt (28) zwischen Innenkörper (6) und der Innenwand des Behälters (7) vorgesehen ist.

5. Vorrichtung nach Anspruch 1 mit einer den Innenumfang eines mit axial verlaufenden Zahnleisten (33) versehenen Behälters (31) bildenden Wandung und einer dieser zugeordneten, am Außenumfang mit korrespondierenden Zahnleisten (39) versehenen Auspreßwalze (38), dadurch gekennzeichnet, daß der Auspreßwalze (38) das Übertragungsrohr (47) zugeordnet ist.

6. Vorrichtung nach Anspruch 5, dadurch gekennzeichnet, daß das Übertragungsrohr (47) im Inneren der als Hohlwalze ausgebildeten Auspreßwalze (38) angeordnet ist.

7. Vorrichtung nach Anspruch 6, dadurch gekennzeichnet, daß die Auspreßwalze über stirnseitig angeordnete Wellerstummel (41) gelagert ist, die jeweils mit einer konzentrisch verlaufenden Bohrung (48) zur Zuführung von Kühlmittel und elektrischer Energie zum Übertragungsrohr (47) versehen sind.

## Claims

1. An apparatus for forming drops from viscous flowable compositions disposed in a rotatable cylindrical container with at least one wall of steel or the like which is provided with a plurality of rows of apertures (9) and which can be expressed cyclically in drop form through a row of orifices, as soon as, upon movement of the wall, they coincide with a non-co-rotating outlet area (16), whereby for heating particularly the residual material remaining in the apertures, at least one heating means is associated with the wall (7, 31), and/or the outlet area (16), characterised in that the heating means is an inductively operating heating means (18, 18') of which the induction coil (18, 18') is associated with a transfer pipe through which coolant passes and which extends parallel with a generatrix of the container (7, 31).

2. An apparatus according to claim 1, with a cylindrical inner container (6) and a wall which is tubular in form and which is part of a cylindrical container (2) rotating about the inner container (6), wherein the outlet area (16) lies at the intersection of a vertical plane with the bottom half of the container, characterised in that the transfer pipe (18) is in the direction of rotation (8) of the container (7), disposed behind the outlet area (16).

3. An apparatus according to claim 2, characterised in that in the direction of rotation (8) of the container (7) there is behind the transfer pipe (18) a member (29) for directing residual material present at the periphery and which can be applied against the periphery of the container.

4. An apparatus according to claim 3, characterised in that in the region of the guide member (29) there is an eccentric gap (28) between the inner member (6) and the inside wall of the container (7).

5. An apparatus according to claim 1 with a wall forming the inner periphery of a container (31) provided with axially extending toothed strips (33) and, associated therewith and provided on the outer periphery with corresponding toothed strips (39), a push-out roller (38),characterised in that the transfer pipe (47) is associated with the push-out roller (38).

6. An apparatus according to claim 5, characterised in that the transfer pipe (47) is disposed inside the push-out roller (38) which is constructed as a hollow cylinder.

7. An apparatus according to claim 6, characterised in that the push-out roller is mounted by means of shaft ends (41) which are in each case provided with a concentrically extending bore (48) for feeding coolant and electrical energy to the transfer pipe (47).

## Revendications

1. Dispositif pour former des gouttes de masses visqueuses fluides, qui sont disposées dans un récipient cylindrique rotatif comportant au moins une paroi en acier ou analogue, qui comporte plusieurs rangées d'ouvertures (9), et peuvent être respectivement refoulées cycliquement sous la forme de gouttes, à travers une rangée d'ouvertures, dès que, lors du déplacement de la paroi, cette rangée d'ouvertures vient en recouvrement avec une zone de sortie (16), qui ne tourne pas, au moins un dispositif de chauffage pour le chauffage notamment de la matière résiduelle qui subsiste dans les ouvertures, étant associée à la paroi (7,31) et/ou à la zone de sortie (16), caractérisé en ce que le dispositif de chauffage est un dispositif de chauffage (18,18') agissant de façon inductive, dont la bobine d'induction (18,18') est associée à un tube de transfert qui s'étend parallèlement à une génératrice de l'enveloppe du récipient (7,31) et est parcouru par un fluide de refroidissement.

2. Dispositif selon la revendication 1, comportant un récipient intérieur cylindrique (6) et une paroi, qui fait partie d'un récipient cylindrique (7) tournant autour de ce récipient et possédant une forme tubulaire et dans lequel la zone de sortie (16) est située au niveau d'une ligne d'intersection d'un plan vertical et de la moitié inférieure du récipient, caractérisé en ce que le tube de transfert (18) est disposé en arrière de la zone de sortie (16), dans le sens de rotation (8) du récipient (7).

3. Dispositif selon la revendication 2, caractérisé en ce qu'un corps de refoulement (29), pouvant être appliqué sur la périphérie du récipient et prévu pour un matériau résiduel présent sur la périphérie, est prévu en arrière du tube de transfert (18), dans le sens de rotation (8) du récipient (7).

4. Dispositif selon la revendication 3, caractérisé en ce qu'une fente excentrique (28) est prévue, dans la zone du dispositif de refoulement (29), entre le corps intérieur (6) et la paroi intérieure du récipient (7).

5. Dispositif selon la revendication 1, comportant une paroi, qui forme la périphérie intérieure d'un récipient (31) pourvu de barrettes dentées axiales (33), et un cylindre d'éjection (38), qui est associé à cette paroi et comporte, sur sa périphérie extérieure, les barrettes dentées correspondantes (39), caractérisé en ce que le tube de transfert (47) est associé au cylindre d'éjection (38).

6. Dispositif selon la revendication 5, caractérisé en ce que le tube de transfert (47) est disposé à l'intérieur du cylindre d'éjection (38) agencé sous la forme d'un cylindre creux.

7. Dispositif selon la revendication 6, caractérisé en ce que le cylindre d'éjection est monté sur des bouts d'arbre (41), qui sont disposés frontalement et qui sont équipés respectivement d'un perçage concentrique (48) pour l'amenée du fluide de refroidissement et de l'énergie électrique au tube de transfert (47).
